# EUROPÄISCHE PATENTSCHRIFT

(11) **EP 3 455 516 B1**
(45) Veröffentlichungstag und Bekanntmachung des Hinweises auf die Patenterteilung: **16.09.2020**
(21) Anmeldenummer: 17727076.6
(22) Anmeldetag: 08.05.2017
(51) Int. Cl.: F16D 55/224, F16D 59/02, F16D 49/14, F16D 49/16, F16D 65/16, F16D 121/12, F16D 121/16

(54) **BREMS- UND/ODER KLEMMVORRICHTUNG MIT EINER BETÄTIGUNGS- UND EINER WELLENANBINDUNGSBAUGRUPPE**
BRAKING AND/OR CLAMPING DEVICE HAVING AN ACTUATION AND A SHAFT-COUPLING ASSEMBLY
DISPOSITIF DE FREINAGE ET/OU DE SERRAGE COMPRENANT UN MODULE D'ACTIONNEMENT ET UN MODULE D'ACCOUPLEMENT D'ARBRE

(30) Priorität: 09.05.2016 DE 102016005549
(43) Veröffentlichungstag der Anmeldung: 20.03.2019
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2017/000121
(87) Internationale Veröffentlichungsnummer: WO 2017/194040

(56) Entgegenhaltungen:
- WO-A1-01/34990
- DE-A1- 2 720 230
- DE-A1- 3 046 156
- DE-A1-102012 023 831
- DE-B- 1 112 873
- DE-U1- 20 306 924
- US-A- 1 948 190

## Beschreibung

Die Erfindung betrifft eine Brems- und/oder Klemmvorrichtung für eine gegenüber einem Grundkörper geführte Welle mit einer Betätigungsbaugruppe und mit einer Wellenanbindungsbaugruppe.

Aus der DE 10 2008 020 518 B4 ist eine Brems- und/oder Klemmvorrichtung für Wellen bekannt, bei der um die Welle herum z.B. zehn auf Reibgehemme wirkende Schiebekeilgetriebe angeordnet sind. Die Schiebekeile werden mittels Pneumatikzylinder verstellt, um die einzelnen Bremsbacken gegen die Welle zu pressen. Diese Konstruktion hat einen hohen Bauraumbedarf und wirkt direkt auf die Welle.

Die DE 11 12 873 B beschreibt eine Klemmeinrichtung mit axial beweglichen Klemmbacken zum Feststellen einer Werkstückspindel. Dazu hat die Werkstückspindel eine umlaufende Ringnut, in die ein in Axialrichtung hydraulisch dehnbarer Klemmring hineinragt. Wird der Innenraum des Klemmrings - zum Feststellen - mit Druck beaufschlagt, legen sich die beiden axialen Wandungen des Klemmrings an die beiden axialen Wandungen der Ringnut an.

Der vorliegenden Erfindung liegt die Problemstellung zugrunde, eine derartige Brems- und/oder Klemmvorrichtung zu entwickeln, die auch bei einem großen Durchmesser eine geringe Baubreite aufweist, aus wenigen Bauteilen besteht und zudem einfach, sicher und wartungsfrei funktioniert.

Diese Problemstellung wird mit den Merkmalen des Hauptanspruchs gelöst. Dabei weist die Betätigungsbaugruppe zwei Ringscheiben auf, die in einer gemeinsamen Kontaktzone direkt oder über ein Zwischenelement dicht aneinanderliegen und jeweils außerhalb der Kontaktzone bereichsweise eine elastisch beulbare Biegezone haben. Die Ringscheiben weisen jeweils in zwei einander gegenüberliegenden Klemmzonen jeweils Zangenbacken mit Reibflächen auf, deren Flächennormalen nach innen gerichtet sind. Zwischen den Ringscheiben liegt ein abgedichteter Druckraum, der zum elastischen Auseinanderdrücken der Reibflächen mit Druckmedium befüllbar ist. Die Wellenanbindungsbaugruppe weist einen Kupplungsbereich auf, der zwei voneinander beabstandete Reibflächen hat, deren Flächennormalen nach außen weisen. Die Wellenanbindungsbaugruppe weist einen Wellenanbindungsbereich auf. Der Wellenanbindungsbereich ist entweder direkt oder indirekt über einen Spannmechanismus am Kupplungsbereich angeordnet. Bei entlastetem Druckraum sind die Reibflächen der Betätigungsbaugruppe an den Reibflächen der Wellenanbindungsbaugruppe unter Bereitstellung der Klemm- und/oder Bremskraft angelegt.

Der Gegenstand der vorliegenden Erfindung ist eine mindestens zweiteilige Brems- und/oder Klemmvorrichtung für Wellen. Das eine Teil wird als Adapter auf die Welle montiert und an dieser festgeklemmt oder festgeschraubt, um mit dieser zu rotieren. Es hat beispielsweise einen radial abstehenden Klemmflansch. Das andere Teil ist eine Art von Zange, die an einem ortsfesten, z.B. die vorgenannte Welle lagernden Maschinenteil befestigt ist. Die Zange hat z.B. ringförmige Zangenbacken, mit denen sie die Stirnseiten des wellenseitigen Flansches lose umfassen oder drehfest umgreifen kann. Die die Welle bremsenden oder klemmenden Vorrichtungsteile liegen nicht auf der Außenwandung der Welle an, d.h. die Arbeitsfuge der Brems- und/oder Klemmvorrichtung ist identisch mit der Wandung der Welle.

Die ringförmigen Zangenbacken der Vorrichtung lassen sich vereinfacht als zwei Tellerfedern beschreiben, deren beiden Innenränder einander zugewandt sind, während die im Durchmesser größeren Außenränder in Axialrichtung weit auseinanderliegen. Zwischen die Innenränder, die eine Klemmzone bilden, wird der Klemmflansch eingelegt. Werden nun die Außenränder, die die Kontaktzone darstellen, in Axialrichtung aufeinander zubewegt, werden die im Durchmesser kleineren Innenränder den Klemmflansch zum Halten federgespannt zangenartig einklemmen. Die Tellerfedern werden bei der Montage der Vorrichtung so fixiert, dass sich der Abstand der Außenränder nicht mehr ändern lässt. Um nun den Klemmflansch wieder freizugeben, werden die Tellerfedern mit Öldruck auseinandergepresst. Die Innenränder lösen sich vom Klemmflansch. Die bisher zum Klemmen wenig vorgespannten Tellerfedern werden somit zum Lösen noch stärker gespannt bzw. verformt.

Alternativ lässt sich die Vorrichtung auch so gestalten, dass der Klemmflansch in der Bohrung eines rotierenden Ringes angebracht wird, während die ortsfest gelagerte Zange räumlich innerhalb des rotierenden Ringes dessen nach innen kragenden Klemmflansch umgreift.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht einer Brems- und/oder Klemmvorrichtung mit einer auf einem Doppelradialspannflansch basierenden Wellen-Naben-Verbindung;
- Figur 2:: Teillängsschnitt zu Figur 1;
- Figur 3:: Teillängsschnitt zu Figur 1, jedoch mit ungeradem und/oder flexiblem Führungselement;
- Figur 4:: Teillängsschnitt durch eine Wellen-Naben-Verbindung mit Verdrängerspannhülse, vergrößert;
- Figur 5:: Teillängsschnitt durch eine Wellen-Naben-Verbindung mit Ringfederspannsatz, vergrößert;
- Figur 6:: Teillängsschnitt der Brems- und/oder Klemmvorrichtung durch die Grundkörperverschraubung;
- Figur 7:: Teillängsschnitt der Brems- und/oder Klemmvorrichtung durch die Ringscheibenverschraubung.

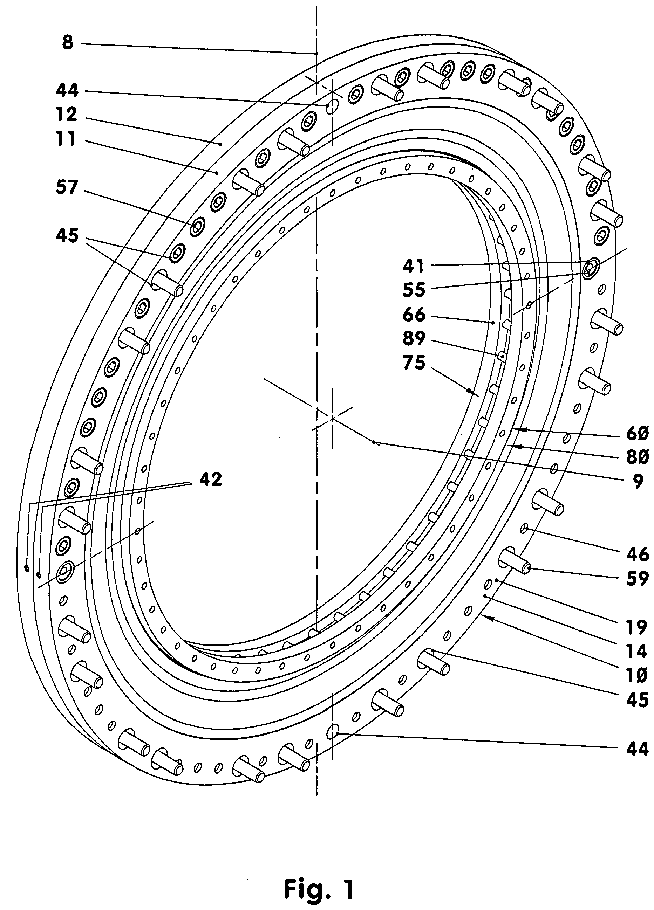

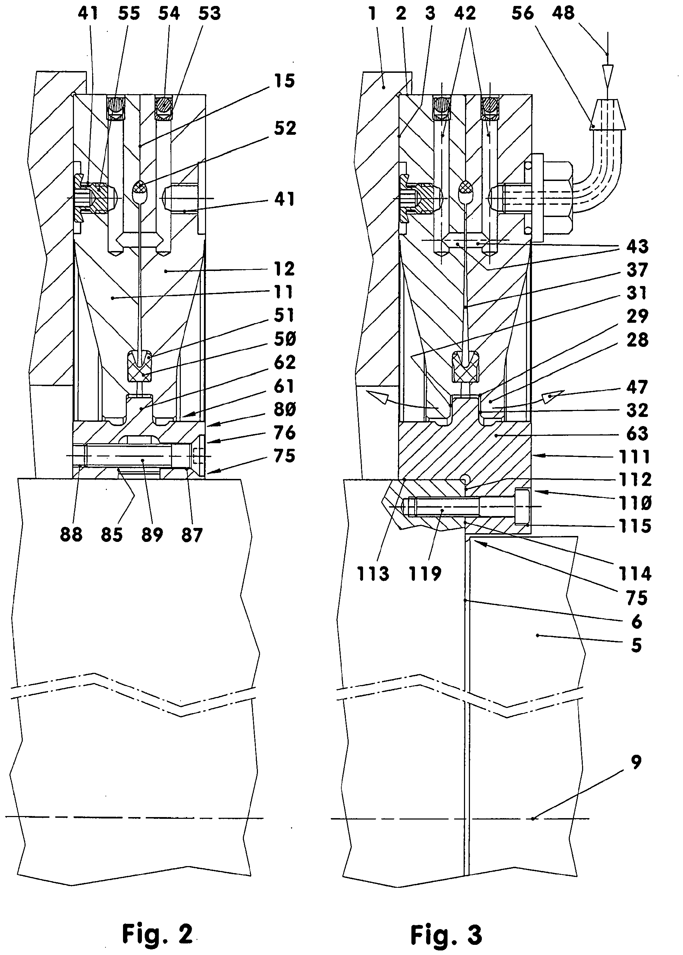

Die Figur 1 zeigt die Brems- und/oder Klemmvorrichtung ohne den tragenden maschinenseitigen Grundkörper (1), vgl. Figur 2 oder 3, und ohne die abzubremsende und/oder festzuklemmende Welle (5). Die außenliegende Betätigungsbaugruppe (10) zeigt als Vorderseite (19) eine Einbaufuge, über die sie mittels der Befestigungsschrauben (59) am Grundkörper (1) angeschraubt wird. Die Betätigungsbaugruppe (10) umgibt eine Wellenanbindungsbaugruppe (60), die einen Klemmflansch (62) an der Welle (5) adaptiert. Die Betätigungsbaugruppe (10) hat zwei in einer Montagefuge (16) gefügte, bereichsweise elastische Ringscheiben (11, 12), die zangenartig am Klemmflansch (62) anliegen. Die Ringscheiben (11, 12) umschließen zudem einen Druckraum (37). Wird letzterer mit Drucköl beaufschlagt, löst sich die zangenartige Umklammerung des Klemmflansches (62).

Der Druckraum (37) hat ein Volumen, das kleiner ist als ein fünfundsiebzigstel des Hüllvolumens der Vorrichtung. Das Hüllvolumen, der in den Figuren dargestellten Variante, entspricht einem gegebenen Rohrvolumen, das als Rohrlänge die Vorrichtungsbreite, als Außenduchmesser den äußeren Vorrichtungsdurchmesser und als Innendurchmesser den Durchmesser der Welle (5) hat.

Die Betätigungsbaugruppe (10) weist zwei aneinander anliegende plattenartige Ringscheiben (11, 12) auf, die den z.B. schmalspaltigen, ringförmigen Druckraum (37) umschließen. Jede Ringscheibe (11, 12) ist im unverformten Zustand eine ebene Scheibe mit einem Innendurchmesser von z.B. ca. 280 mm und einem Außendurchmesser von 388 mm. Die maximale Dicke der Scheibe liegt z.B. bei 11 mm. Die Ringscheibe (11, 12) ist aus einem Vergütungsstahl, z.B. 42CrMoS4, gefertigt. Sie ist in drei Bereiche (13, 21, 26) aufgeteilt, die in Radialrichtung aneinander anschließen. Ein innerer Bereich ist die Klemmzone (26). An sie schließt sich eine Biegezone (21) an, die wiederum in einen äußeren Bereich, die Kontaktzone (13), mündet.

Die Kontaktzone (13) hat jeweils eine plane Stirnfläche (15), über die die Ringscheiben (11, 12) im montierten Zustand dicht aneinander liegen. Sie weist z.B. alle 5 Winkelgrade eine Bohrung auf, von denen nur zwei Zentrierbohrungen (44) und zwei weitere Zulaufgewindebohrungen (41) sind. Die restlichen Durchgangsbohrungen sind Bohrungen (45) mit einer Senkung nach DIN 974-1 oder Gewindebohrungen (46). Nach Figur 1 hat die vordere Ringscheibe (11) in der oberen Hälfte - mit Ausnahme der Zentrierbohrung (44) - nur die Bohrungen (45), während die untere Hälfte - auch mit Ausnahme der Zentrierbohrung (44) - neben 21 Gewindebohrungen (46) noch 12 Bohrungen (45) mit Senkung auf-weist. In der Summe halten 24 Befestigungsschrauben (59) die Vorrichtung am Grundkörper (1).

Jeweils zwischen einer ersten und einer zweiten Befestigungsschraube (59) ist eine Gehäuseschraube (57) positioniert. Zwischen der zweiten und einer dritten Befestigungsschraube (59) sind drei Gehäuseschrauben (57) angeordnet. Ab der dritten Befestigungsschraube (59) wiederholt sich das Verschraubungsmuster.

Die nach Figur 1 hinten gelegene Ringscheibe (12) ist gegenüber der vorderen Ringscheibe (11) um die in der Montagefuge (16) liegende fiktive Achse (8) um 180 Winkelgrade geschwenkt und dann zusätzlich um die Mittellinie (9) nochmals um 180 Winkelgrade gedreht. Durch die vorliegende Anordnung der Bohrungen (41, 44, 45, 46) können beide Ringscheiben (11, 12) baugleich ausgeführt sein.

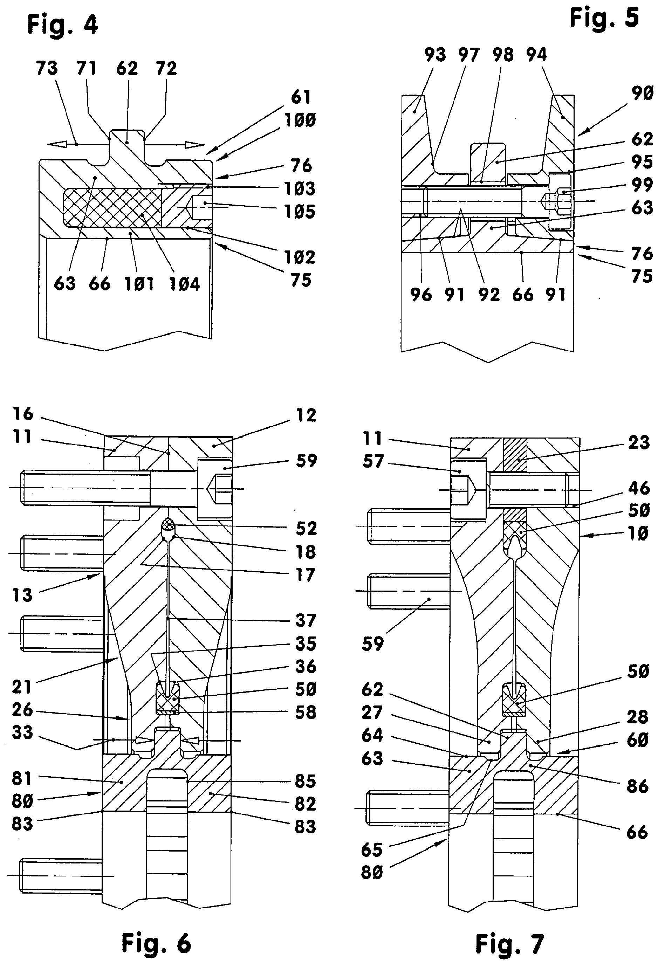

In der Innenwandung (15) der Ringscheibe (12) ist in der Kontaktzone (13), vgl. Figur 6, eine umlaufende Verteilhalbnut (18) angeordnet, die zusammen mit der Verteilhalbnut (17) der anderen Ringscheibe (11) die Verteilnut bildet. In der Verteilnut (17, 18) liegt ein O-Ring (52). In Radialrichtung außerhalb der Verteilnut (17, 18) befindet sich die hydraulikölfreie Montagefuge (16). Radial innerhalb der Verteilnut (17, 18) liegt der spaltförmige Druckraum (37). Er wird radial nach außen durch den O-Ring (52) begrenzt. Zur Mittellinie (9) hin wird der Druckraum (37) durch eine Doppellippendichtung (50) abgeschlossen. Die Doppellippendichtung (50) sitzt in einem - im Querschnitt zumindest annähernd rechteckigen - Ringkanal, der pro Ringscheibe (11, 12) durch einen Halbringkanal (35, 36) gebildet wird. Der Halbringkanal (35, 36) befindet sich in der Übergangszone zwischen der Biegezone (21) und der Klemmzone (26).

Die Doppellippendichtung (50), sie ist z.B. aus einem Polyurethan mit einer Shore D-Härte von 57 gefertigt, hat zwei radial nach außen orientierte Dichtlippen (51), die sich jeweils am Nutgrund der Halbringkanäle (35) und (36) aufgrund der eigenen Elastizität oder zusätzlich durch den im Druckraum (37) anstehenden Innendruck anlegen. Nach den Figuren 5 und 6 weist die Doppellippendichtung (50) an ihrer zur Mittellinie (9) hin orientierten Flanke einen metallischen Versteifungsring (58) auf. Letzterer soll verhindern, dass sich Teile der Dichtung (50) - zumal wenn sie beispielsweise eine Härte unter 50 Shore D hat - dauerhaft in den zwischen den Ringscheiben (11, 12) gelegenen Spalt (37) in der Klemmzone (26) festsetzen. Der Versteifungsring (58) ist entweder lose in den Ringkanal (35, 36) eingelegt oder er ist stoffschlüssig mit dem Dichtring (50) verbunden, z.B. durch Verkleben oder durch Vulkanisieren.

Die jeweilige Verteilhalbnut (17, 18) befindet sich bei öldruckbelasteten Ringscheiben (11, 12) im Randbereich des größten Biegemoments. Um die durch die z.B. 1,2 mm tiefe Verteilhalbnut (17, 18) entstehende Kerbspannung so niedrig wie möglich zu halten, hat der Querschnitt der Verteilhalbnut (17, 18) zur Montagefuge (16) hin einen Radius von 2 mm. Zum Spaltraum (37) hin misst der Radius 1,25 mm.

In der Variante nach Figur 7 ist zwischen den beiden Ringscheiben (11, 12) als Zwischenelement eine Distanzscheibe (23) angeordnet. An der Distanzscheibe (23) legt sich beispielsweise ein zweiter Dichtring (50) an, dessen Dichtlippen in Richtung des ersten - in Figur 7 unten liegenden - Dichtrings (50) orientiert sind.

Gemäß der Figuren 1 bis 3 befinden sich in der Kontaktzone (13) mindestens jeweils zwei einander koaxial gegenüberliegende Zulaufgewindebohrungen (41). Die hier verwendeten M5-Gewinde neh men nach Figur 3 jeweils einen Verschlussstopfen (55) und einen Hydraulikadapter (56) auf. Jede Zulaufgewindebohrung (41) schneidet eine radiale Verteilbohrung (42). Nach außen hin sind diese Verteilbohrungen (42) jeweils durch eine Klemmbüchse (53) verschlossen. In die Bohrung der Klemmbüchse (53) ist jeweils eine Stauchkugel (54) eingestemmt, die die Klemmbüchse (53) in der einzelnen radialen Verteilbohrung (42) zumindest öldicht dauerhaft fixiert. Jede radiale Verteilbohrung (42) trifft z.B. senkrecht auf eine axiale Verteilbohrung (43), die in den Druckraum (37) mündet. Die Verteilbohrungen (42, 43) haben hier einen Durchmesser von 2,5 mm. Das über den Hydraulikadapter (56) einströmende Hydrauliköl, z.B. ein Öl vom Typ HLP 46 nach DIN 51524, Teil 2, das bei 40° Celsius eine Viskosität von 46 ± 2 mm²/s aufweist, verteilt sich u.a. über die Verteilnut (17, 18) schnell im Druckraum (37).

Die Klemmzone (26), die zu der jeweiligen Wellenanbindungsbaugruppe (60) hin orientiert ist, weist die umlaufenden Zangenbacken (27, 28) auf. Zur Montagefuge (16) hin hat die Ringscheibe (11, 12) eine Eindrehung (29), wodurch die beispielsweise plane Reibfläche (31, 32) an den Zangenbacken (27, 28) entsteht. Im Ausführungsbeispiel hat die einzelne Reibfläche (31, 32) bei einem mittleren Radius von 142,3 mm eine Tiefe von 3 mm. Die Backenbreite des einzelnen Zangenbackens (27, 28) beträgt hier z.B. 4,2 mm. In der Klemmzone (26) beträgt die maximale Breite der Reibfläche (31, 32) z.B. 6 mm. Die Reibflächen (31, 32) haben nach innen gerichtete Flächennormalen (33). Letztere zeigen nach Figur 6 in Richtung einer Ebene, in der auch die Montageebene (16) liegt.

Anstelle der planen Reibflächen (31, 32), die zudem parallel zur Montagefuge orientiert sind, können die Reibflächen auch die Gestalt eines Kegelstumpfmantels oder eines Teilbereiches eines Torus haben.

Zwischen der Klemmzone (26) und der Kontaktzone (13) liegt die elastische Biegezone (21). Ihre Wandstärke sinkt mit abnehmendem Vorrichtungsradius von z.B. 11 mm auf 6 mm. Die Formsteifigkeit der Ringscheibe (11, 12) nimmt somit in Richtung Klemmzone (26) nahezu stetig ab. Die Übergänge zwischen den Zonen (26) und (21) sowie den Zonen (21) und (13) sind mit großen Radien ausgerundet. Die beiden Radien liegen in der Größenordnung der doppelten maximalen Wandstärke der einzelnen Ringscheibe (11, 12). Die Biegezone (21) ist gegenüber der Kontaktzone (13) - im Bereich der außenliegenden Stirnwandung (14) - um 0,2 mm gegenüber Einbaufuge zurückgenommen, um die Verformung der Biegezone (21) nicht in die zwischen dem Grundkörper (1) und der Ringscheibe (11) gelegenen Einbaufuge einzutragen.

Die Zangenbacken (27, 28) der Betätigungsbaugruppe (10) liegen bei geklemmter Brems- und/oder Klemmvorrichtung an einem Klemmflansch (62) des Kupplungsbereiches (61) einer Wellenanbindungsbaugruppe (60) an.

In den Figuren 1 und 3 bis 5 sind vier verschiedene Wellenanbindungsbaugruppen (80, 90, 100, 110) dargestellt. Die Figur 3 zeigt als Wellenanbindungsbaugruppe eine Anbindungsbaugruppe mit Axialmontageflansch (110). Bei dieser Variante besteht der Kupplungsbereich (61) aus einem Flanschkern (63), einem ringförmigen Körper, der radial außen den z.B. zentral angeformten Klemmflansch (62) trägt. Der z.B. 4,4 mm breite Klemmflansch (62) steht als umlaufender Steg vom Flanschkern (63) radial um z.B. 4 mm ab. Seine Stirnflächen bilden z.B. ebene Reibflächen (71, 72). Letztere sind in der Regel, wie auch die Reibflächen (31, 32) der Zangenbacken (27, 28), fein bearbeitet. Die Reibflächen (71, 72) haben nach außen gerichtete Flächennormalen (73).

Alternativ können die Reibflächen (31, 32) oder die Reibflächen (71, 72) eine Oberflächenstruktur aufweisen. Beispielsweise entsteht diese durch Sandstrahlen oder durch eine Diamant- oder Saphirbeschichtung. Derartige Beschichtungen weisen eine Schichtstärke von z.B. 0,038 mm auf. Die durchschnittliche Korngröße des Beschichtungsgrundmaterials liegt bei dieser Schichtstärke bei 30 µm.

Der Klemmflansch (62) geht in den Flanschkern (63) beidseitig über Entlastungskerben (65) über, vgl. Figur 7. Die Entlastungskerben (65) sind 2,8 mm breit, 0,65 mm tief und weisen beidseitig jeweils 1 mm-Radien auf.

Der Flanschkern (63) hat zur Ausbildung eines Axialmontageflansches (111) eine zentrale Stufenbohrung (112), die eine radiale Sitzfläche (113) und flanschbundseitig eine plane Bundfläche (114) trägt. Im Bereich des Axialmontageflansches (111) befinden sich mehrere zur Mittellinie (9) parallele Bohrungen (115) mit Zylindersenkungen. In diesen Bohrungen (115) sitzen Schrauben (119), über die die Anbindungsbaugruppe (110) direkt mit der Welle (5) an deren Wellenbund (6) verschraubt ist.

Der Klemmflansch (62) kann ggf. auch Quernuten aufweisen, die bis an den Flanschgrund (64) reichen. Auf diese Weise stehen, anstatt eines vollständig umlaufenden Klemmflansches (62), mehrere oder viele Klemmstege vom Flanschkern (63) radial ab, um zwischen die Zangenbacken (27, 28) hineinzuragen. Die Klemmstege können dabei - zur Beeinflussung des Vorrichtungsgeräusches - mit konstanter oder unregelmäßiger Teilung vom Flanschkern (63) abstehen.

Die Figuren 1 und 2 zeigen eine Wellenanbindungsbaugruppe (80) mit einem Doppelradialspannflansch. Hier hat der Flanschkern (63) eine zentrale, zylindrische Bohrung (66), in die hier mittig eine Nut (85) eingearbeitet ist, die z.B. einen rechteckigen Querschnitt hat. So entstehen zur Herstellung eines Spannmechanismus (76) im Wellenanbindungsbereich (75) zwei Spannflansche (81, 82). Die Nutbreite beträgt z.B. 7 mm bei einer Nuttiefe von z.B. 7,35 mm. Die Nut (85) hat zwei Ausrundungsradien von 1,5 mm. Zwischen der einzelnen Entlastungskerbe (65) und der nächstgelegenen Nutausrundung liegt ein Materialsteg (86) von 1,5 bis 2 mm. Der Flanschkern (63) ist im Bereich der Spannflansche (81, 82) so durchbohrt, dass sich nach Figur 2 rechts neben der Nut (85) paarweise viele Bohrungen (87) mit Kegelsenkung und links neben der Nut (85) entsprechend viele Gewindebohrungen (88), z.B. M4, befinden. Im Ausführungsbeispiel sind 48 Schrauben (89) eingeschraubt.

Ggf. ist die Spannfläche (66), deren Innendurchmesser hier z.B. 260 mm beträgt, mit einer Diamant- oder Saphirbeschichtung ausgestattet, vgl. ggf. vorhandene Beschichtung der Reibflächen (31, 32) oder (71, 72). Anstelle der festhaftenden Beschichtung, kann auch in die Montagefuge zwischen der Spannfläche (66) und der Wellenoberfläche eine Diamantpaste zum Verbessern der Haftung eingebracht werden. Alternativ kann die Spannfläche (66) und/oder die Wellenoberfläche im Sitzbereich des Flanschkerns (63) über eine Reibstruktur verfügen, die z.B. aufgelasert wird.

Werden nach dem Aufschieben der Vorrichtung auf die Welle (5) an den vorgesehenen Einbauplatz die Schrauben (89) festgeschraubt, so werden die Spannflansche (81, 82) gegeneinander gezogen. Hierdurch legen sich aufgrund der gelenkartigen Nachgiebigkeit der Materialstege (86) des Flanschkerns (63) die Spannflansche (81, 82) über die Tragkanten (83), vgl. Figur 6, primär unter radialer Verspannung fest an.

Eine alternative Wellenanbindungsbaugruppe (60) ist in Figur 4 dargestellt. Sie zeigt eine Anbindungsbaugruppe (100) mit Verdrängerspannhülse. Hier weist der Kernflansch (63) als Wellenanbindungsbereich (75) eine umlaufende Stirnnut (102) auf, die nach Figur 4 von der rechten Stirnseite aus in den Flanschkern (63) eingearbeitet ist. In die außenliegende Wandung der Stirnnut (102) ist z.B. 7 mm tief ein Feingewinde (103) eingeschnitten. Zur Welle (5) bzw. zur Bohrung (66) hin bleibt eine elastische, z.B. 1,4 mm dicke, Klemmhülsenwandung (101) der Verdrängerspannhülse stehen.

In die Stirnnut (102) ist als Verdrängerkörper ein ringförmiger Elastomerkörper (104) eingesetzt. Seine Breite überdeckt 55 bis 70% der Flanschkernbreite. Seine Wandstärke misst z.B. 5 mm. Zur Herstellung eines klemmenden Spannmechanismus (76) wird bei der Montage der Anbindungsbaugruppe (100) auf die Welle (5) in das Innengewinde (103) ein Gewindering (105), z.B. mittels Hakenschlüssel, eingeschraubt. Der Elastomerkörper (104) wird so verdichtet, dass sich die Klemmhülsenwandung (101) verdrehfest an der Welle (5) anschmiegt.

Der Elastomerkörper (104) ist beispielweise aus dem AcrylnitrilButadien-Kautschuk NBR hergestellt. Seine Härte in Shore A liegt zwischen 64 und 68.

Die Figur 5 zeigt einen Teilschnitt einer Wellenanbindungsbaugruppe (90) mit einer Schrumpfscheibenverbindung. Hier ist der Flanschkern (63) ein relativ dünner Ring, der sich beidseitig nach außen im Durchmesser verjüngt. Rechts und links neben dem zentralen Klemmflansch (62) weist er als radiale Außenwandung zwei Kegelstumpfmäntel (91) auf. Der zentrale Klemmflansch (62) ragt hier ca. 11,5 mm in Radialrichtung über die Kegelstumpfmäntel (91) über.

Auf diesen Kegelstumpfmänteln (91) sitzen beidseitig die Ringkegelspannelemente (93, 94) auf, um zusammen mit dem Flanschkern (63) eine als Spannmechanismus dienende Schrumpfscheibe zu bilden. Die Ringkegelspannelemente (93, 94) sind Ringe, deren zentrale Ausnehmung (92) konisch passend zu den Kegelstumpfmänteln (91) gestaltet ist. Der Konuswinkel beträgt z.B. 5 Winkelgrade. Um Platz für die Zangenbacken (27, 28) der Betätigungsbaugruppe (10) zu lassen, sind die Ringkegelspannelemente (93, 94) jeweils an den Stirnseiten, die zum Klemmflansch (62) hin orientiert sind, mit z.B. an der engsten Stelle ca. 4,3 mm breiten und 10 mm tiefen Eindrehungen (97) versehen. Die Breite der Eindrehungen (97) vergrößert sich mit zunehmendem Radius stetig.

Beide Ringkegelspannelemente (93, 94) tragen koaxiale Bohrungen (95, 96) für die Schrauben (99), mit denen die Ringkegelspannelemente (93, 94) unter axialer und radialer Verspannung gegen den dünnwandigen Flanschkern (63) gepresst werden. Das nach Figur 5 linke Ringkegelspannelement (93) weist dazu eine Gewindebohrung (96) auf, während das rechte Ringkegelspannelement (94) mit einer Bohrung (95) mit Zylindersenkung versehen ist. Die Schrumpfscheibe hat z.B. 24 Schrauben (99). Alle Schrauben durchqueren auch den Klemmflansch (62) zwischen den Reibflächen (31, 32) und dem Flanschkern (63), der zu den Bohrungen (95, 96) eine konzentrische Bohrung (98) aufweist.

Ausgeliefert wird diese Brems- und/oder Klemmvorrichtung in Kombination mit der gewählten Wellenanbindungsbaugruppe (80, 90, 100, 110). Dabei sitzt die jeweilige Wellenanbindungsbaugruppe (80, 90, 100, 110) koaxial in der Betätigungsbaugruppe (10). Für die Montage in der die Vorrichtung aufnehmenden Maschine wird die Wellenanbindungsbaugruppe (80, 90, 100) auf die Welle (5) geschoben und dort direkt an der Anbaufläche (3) des Grundkörpers (1) anstehend - in der Regel lösbar - befestigt. Abschließend werden die Befestigungsschrauben (59) in die entsprechenden grundkörperseitigen Bohrungen eingesetzt und dort verschraubt.

Steht im Druckraum (37) kein Hydraulikölbetriebsdruck an, so ist die Welle (5) gegenüber dem Grundkörper (1) festgeklemmt. Der Druckraum (37) weist keinen nennenswerten Öldruck auf, da der Ölzulauf über ein nicht dargestelltes Ventil in den Öltank entlastet ist. Die Ringscheiben (11, 12) liegen vorgespannt über ihre Zangenbacken (27, 28) am Klemmflansch (62) an, vgl. Figur 2. Die Vorspannung ergibt sich aus der Federrate der vorgebeulten Ringscheiben (11, 12). Die Höhe der Federrate ist eine Funktion der ringscheibenseitigen Werkstoffauswahl und der Geometrie der Biegezone (21). Das erzeugte Brems- bzw. Haltemoment liegt bei 3000 ± 200 Nm.

Die Ringscheiben (11, 12) befänden sich nur dann im vollständig entspannten Zustand, wenn kein Klemmflansch (62) zwischen den Zangenbacken (27, 28) läge. Dann wäre im Ausführungsbeispiel der Druckraum (37) ein Spaltraum mit konstanter Spaltbreite.

Um die Brems- und/oder Klemmvorrichtung zu lösen, wird über den Hydraulikadapter (56), vgl. Figur 3, der Drucköldruck im Druckraum (37) auf z.B. 100 bis 150 *10⁵ Pa erhöht. Vom Hydraulikadapter (56) aus pflanzt sich die Druckerhöhung über die Verteilbohrungen (42) und (43) in den Druckraum (37) fort. Die Ringscheiben (11, 12) beulen in den elastischen Biegezonen (21), vgl. Figur 3. Dabei wandert jede Klemmzone (26) gegenüber der ortsfest bleibenden Kontaktzone (13) im Wesentlichen in Axialrichtung nach außen. Die Zangenbacken (27, 28) heben in Richtung der Pfeile (47) vom Klemmflansch (62) ab. Die betätigungsbaugruppenseitigen Reibflächen (31, 32) entfernen sich von den wellenanbindungsbaugruppenseitigen Reibflächen (71, 72), so dass zwischen der Welle (5) und dem Grundkörper (1) kein Kontakt mehr besteht. Das Lüftspiel pro Reibflächenpaarung (31) zu (71) und (32) zu (72), also der Abstand zwischen den zuvor sich kontaktierenden Reibflächen, beträgt nun zwischen 0,3 und 0,5 mm. Die Vorrichtung ist auf 5 bis 10 Millionen Öffnungs- bzw. Schließzyklen ausgelegt.

### Bezugszeichenliste:

- 1: Grundkörper
- 2: Zentrierung, Außenzentrierung
- 3: Anbaufläche von (1)
- 5: Welle
- 6: Wellenbund
- 8: fiktive Achse, vertikal
- 9: Mittellinie der Vorrichtung

- 10: Betätigungsbaugruppe
- 11, 12: Ringscheiben, beulbare Platten
- 13: Kontaktzone
- 14: Außenwandung, Stirnwandung
- 15: Innenwandung, Stirnfläche
- 16: Montagefuge
- 17, 18: Verteilhalbnut; montiert: Verteilnut
- 19: Vorderseite
- 21: Biegezone, beulbar, elastisch
- 23: Zwischenelement, Distanzscheibe
- 26: Klemmzone
- 27, 28: Zangenbacken
- 29: Eindrehung
- 31, 32: Reibflächen
- 33: Flächennormalen
- 35, 36: Halbringkanal; montiert: Ringkanal
- 37: Druckraum, Spaltraum, Spalt

- 41: Zulaufgewindebohrungen
- 42: Verteilbohrung, radial
- 43: Verteilbohrung, axial
- 44: Zentrierbohrungen, Durchgangsbohrungen
- 45: Bohrungen mit Senkungen, Durchgangsbohrungen Befestigungsbohrungen
- 46: Gewindebohrungen, Durchgangsbohrungen
- 47: Pfeile, Bewegungsrichtung
- 48: Hydraulikölzulauf

- 50: Doppellippendichtung, Dichtring
- 51: Dichtlippen
- 52: O-Ring
- 53: Klemmbüchse
- 54: Stauchkugel
- 55: Verschlussstopfen
- 56: Hydraulikadapter
- 57: Gehäuseschrauben für (11) und (12)
- 58: Versteifungsring für (50)
- 59: Befestigungsschrauben

- 60: Wellenanbindungsbaugruppe
- 61: Kupplungsbereich
- 62: Klemmflansch, zentral
- 63: Flanschkern
- 64: Flanschgrund
- 65: Entlastungskerben
- 66: Bohrung, zentral; Spannfläche
- 71, 72: Reibflächen
- 73: Flächennormalen
- 75: Wellenanbindungsbereich
- 76: Spannmechanismus

- 80: Wellenanbindungsbaugruppe mit Doppelradialspannflansch
- 81, 82: Spannflansch, links, rechts; radial
- 83: Tragkanten
- 85: Nut
- 86: Materialsteg
- 87: Bohrung mit Kegelsenkung
- 88: Gewindebohrung
- 89: Schraube, Zylinderkopfschraube

- 90: Wellenanbindungsbaugruppe mit Schrumpfscheibenverbindung
- 91: Kegelstumpfmäntel, Außenwandungen, radial; Konen
- 92: Ausnehmung, zentral
- 93, 94: Ringkegelspannelemente
- 95: Bohrung mit Senkung
- 96: Gewindebohrung
- 97: Eindrehung
- 98: Bohrung in (62)
- 99: Schrauben

- 100: Wellenanbindungsbaugruppe mit Verdrängerspannhülse
- 101: Klemmhülsenwandung
- 102: Stirnnut, Ausnehmung für (104)
- 103: Innengewinde, Feingewinde
- 104: Elastomerkörper, Gummikörper, Verdrängerkörper
- 105: Gewindering

- 110: Wellenanbindungsbaugruppe mit Axialmontageflansch
- 111: Axialmontageflansch
- 112: Stufenbohrung
- 113: Sitzfläche, radial
- 114: Bundfläche, plan
- 115: Bohrungen
- 119: Schrauben

## Patentansprüche

1. Brems- und/oder Klemmvorrichtung für eine gegenüber einem Grundkörper (1) geführte Welle (5), wobei die Brems- und/oder Klemmvorrichtung eine Betätigungsbaugruppe (10) und eine Wellenanbindungsbaugruppe (60, 80, 90, 100, 110) aufweist,
- wobei die Betätigungsbaugruppe (10) zwei Ringscheiben (11, 12) aufweist, die in einer gemeinsamen Kontaktzone (13) direkt oder über ein Zwischenelement (23) dicht aneinanderliegen und jeweils außerhalb der Kontaktzone (13) bereichsweise eine elastisch beulbare Biegezone (21) haben,
- wobei die Ringscheiben (11, 12) jeweils in zwei einander gegenüberliegenden Klemmzonen (26) jeweils Zangenbacken (27, 28) mit Reibflächen (31, 32) aufweisen, deren Flächennormalen (33) nach innen gerichtet sind,
- wobei zwischen den Ringscheiben (11, 12) ein abgedichteter Druckraum (37) liegt, der zum elastischen Auseinanderdrücken der Reibflächen (31, 32) mit Druckmedium befüllbar ist,
- wobei die Wellenanbindungsbaugruppe (60, 80, 90, 100, 110) einen Kupplungsbereich (61) aufweist, der zwei voneinander beabstandete Reibflächen (71, 72) hat, deren Flächennormalen (73) nach außen weisen,
- wobei die Wellenanbindungsbaugruppe (60, 80, 90, 100, 110) einen Wellenanbindungsbereich (75) aufweist,
- wobei der Wellenanbindungsbereich (75) entweder direkt oder indirekt über einen Spannmechanismus (76) am Kupplungsbereich (61) angeordnet ist und
- wobei bei entlastetem Druckraum (37) die Reibflächen (31, 32) der Betätigungsbaugruppe (10) an den Reibflächen (71, 72) der Wellenanbindungsbaugruppe (60, 80, 90, 100, 110) unter Bereitstellung der Klemm- und/oder Bremskraft angelegt sind.

2. Brems- und oder Klemmvorrichtung gemäß Anspruch 1, **dadurch gekennzeichnet, dass** der Druckraum (37) in Axialrichtung durch die Ringscheiben (11, 12) und in Radialrichtung durch mindestens einen Dichtring (50, 52) begrenzt ist.

3. Brems- und oder Klemmvorrichtung gemäß Anspruch 2, **dadurch gekennzeichnet, dass** der Dichtring (50) ein Doppellippendichtring ist, dessen beiden Dichtlippen (51) in Richtung der Kontaktzone (13) orientiert sind.

4. Brems- und oder Klemmvorrichtung gemäß Anspruch 1, **dadurch gekennzeichnet, dass** die Reibflächen (31, 32) der Zangenbacken (27, 28) eben sind.

5. Brems- und oder Klemmvorrichtung gemäß Anspruch 1, **dadurch gekennzeichnet, dass** die Wellenanbindungsbaugruppe (80, 90, 100) einen Flanschkern (63) mit einem angeformten oder angebauten Klemmflansch (62) aufweist.

6. Brems- und oder Klemmvorrichtung gemäß Anspruch 1, **dadurch gekennzeichnet, dass** der Wellenanbindungsbereich (75) der Wellenanbindungsbaugruppe (80, 90, 100) radial an der Welle (5) anlegbar ist.

7. Brems- und oder Klemmvorrichtung gemäß Anspruch 1, **dadurch gekennzeichnet, dass** der Wellenanbindungsbereich (75) der Wellenanbindungsbaugruppe (80) zwei gegeneinander verspannbare Spannflansche (81, 82) aufweist.

8. Brems- und oder Klemmvorrichtung gemäß Anspruch 1 oder 5, **dadurch gekennzeichnet, dass** der Wellenanbindungsbereich (75) der Wellenanbindungsbaugruppe (90) zwei Ringkegelspannelemente (93, 94) aufweist, die gegen die einander gegenüberliegenden Konen (91) des Flanschkerns (63) verspannbar sind.

9. Brems- und oder Klemmvorrichtung gemäß Anspruch 1, **dadurch gekennzeichnet, dass** der Wellenanbindungsbereich (75) der Wellenanbindungsbaugruppe (100) eine volumenverringerbare Ausnehmung (102) aufweist, in der ein Elastomerkörper (104) als Verdrängerkörper eingeschlossen angeordnet ist.

## Claims

1. A braking and/or clamping device for a shaft (5) guided in relation to a main body (1), wherein the brake and/or clamping device comprises an actuating subassembly (10) and a shaft attachment subassembly (60, 80, 90, 100, 110),
- wherein the actuating subassembly (10) comprises two annular discs (11, 12) which rest closely against one another directly or via an intermediate member (23) in a common contact zone (13) and each have an elastically pliable bending zone (21) in sections outside the contact zone (13),
- wherein the annular discs (11, 12) each have jaws (27, 28) with frictional faces (31, 32) in two clamping zones (26) lying opposite one another, the surface normals (33) whereof are oriented inwardly,
- wherein a sealed pressure chamber (37) is arranged between the annular discs (11, 12) which can be filled with pressure medium for the elastic pressing-apart of the friction surfaces (31, 32),
- wherein the shaft attachment subassembly (60, 80, 90, 100, 110) comprises a coupling region (61) which has two frictional faces (71, 72) spaced apart from one another, the surface normals (73) whereof point outwardly,
- wherein the shaft attachment subassembly (60, 80, 90, 100, 110) comprises a shaft attachment region (75),
- wherein the shaft attachment region (75) is arranged on the coupling region (61) either directly or indirectly via a clamping mechanism (76) and
- wherein when the pressure chamber (37) is relaxed, the friction faces (31, 32) of the actuating subassembly (10) are applied to the friction faces (71, 72) of the shaft attachment subassembly (60, 80, 90, 100, 110) while supplying the clamping and/or braking force.

2. The braking and/or clamping device according to claim 1, **characterized in that** the pressure chamber (37) is delimited by the annular discs (11, 12) in the axial direction and by at least one sealing ring (50, 52) in the radial direction.

3. The braking and/or clamping device according to claim 2, **characterized in that** the sealing ring (50) is a double-lipped sealing ring, the two sealing lips (51) whereof are oriented in the direction of the contact zone (13).

4. The braking and/or clamping device according to claim 1, **characterized in that** the frictional faces (31, 32) of the jaws (27, 28) are planar.

5. The braking and/or clamping device according to claim 1, **characterized in that** the shaft attachment assembly (80, 90, 100) comprises a flange core (63) with a moulded-on or mounted clamping flange (62).

6. The braking and/or clamping device according to claim 1, **characterized in that** the shaft attachment region (75) of the shaft attachment subassembly (80, 90, 100) can be applied radially to the shaft (5).

7. The braking and/or clamping device according to claim 1, **characterized in that** the shaft attachment region (75) of the shaft attachment subassembly (80) comprises two clamping flanges (81, 82) that can be braced in respect of one another.

8. The braking and/or clamping device according to claim 1 or 5, **characterized in that** the shaft attachment region (75) of the shaft attachment subassembly (90) comprises two annular cone clamping elements (93, 94) which can be braced against the cones (91) of the flange core (63) lying opposite one another.

9. The braking and/or clamping device according to claim 1, **characterized in that** the shaft attachment region (75) of the shaft attachment subassembly (100) has a volume-reducible recess (102) in which an elastomer body (104) is arranged enclosed as the displacing body.

## Revendications

1. Dispositif de freinage et/ou de serrage d'un arbre (5) guidé par rapport à un corps de base (1), le dispositif de freinage et/ou de serrage comportant un ensemble d'actionnement (10) et un ensemble d'accouplement sur l'arbre (60, 80, 90, 100, 110),
- l'ensemble d'actionnement (10) comportant deux disques annulaires (11, 12) qui dans une zone de contact (13) commune sont intimement adjacents l'un à l'autre, directement ou via un élément intermédiaire (23) et qui détiennent chacun par endroits à l'extérieur de la zone de contact (13) une zone d'inflexion (21) élastiquement bosselable,
- dans chaque fois deux zones de serrage (26) mutuellement opposées, les disques annulaires (11, 12) comportant chacun des mâchoires (27, 28) pourvues de surfaces de friction (31, 32), dont les normales à la surface (33) sont dirigées vers l'intérieur,
- entre les disques annulaires (11, 12) se situant un espace de pression (37) hermétique, qui pour écarter les surfaces de friction (31, 32) peut se remplir d'un milieu sous pression,
- l'ensemble d'accouplement sur l'arbre (60, 80, 90, 100, 110) comportant une zone de couplage (61) qui dispose de deux surfaces de friction (71, 72) distancées l'une de l'autre, dont les normales à la surface (73) sont dirigées vers l'extérieur,
- l'ensemble d'accouplement sur l'arbre (60, 80, 90, 100, 110) comportant une zone d'accouplement sur l'arbre (75),
- la zone d'accouplement sur l'arbre (75) étant placée, soit directement ou indirectement par l'intermédiaire d'un mécanisme tendeur (76) sur la zone de couplage (61) et
- dans l'espace de pression (37) déchargé, les surfaces de friction (31, 32) de l'ensemble d'actionnement (10) étant appuyées sur les surfaces de friction (71, 72) de l'ensemble d'accouplement sur l'arbre (60, 80, 90, 100, 110), en mettant à disposition la force de serrage et/ou de freinage.

2. Dispositif de freinage et/ou de serrage selon la revendication 1, **caractérisé en ce que** l'espace de pression (37) est délimité dans la direction axiale par les disques annulaires (11, 12) et dans la direction radiale par au moins une bague d'étanchéité (50, 52).

3. Dispositif de freinage et/ou de serrage selon la revendication 2, **caractérisé en ce que** la bague d'étanchéité (50) est une bague d'étanchéité à double lèvre, dont les deux lèvres d'étanchéité (51) sont orientées dans la direction de la zone de contact (13).

4. Dispositif de freinage et/ou de serrage selon la revendication 1, **caractérisé en ce que** les surfaces de friction (31, 32) des mâchoires (27, 28) sont planes.

5. Dispositif de freinage et/ou de serrage selon la revendication 1, **caractérisé en ce que** l'ensemble d'accouplement sur l'arbre (80, 90, 100) comporte un noyau de bride (63) pourvu d'une bride de serrage (62) surmoulée ou rapportée.

6. Dispositif de freinage et/ou de serrage selon la revendication 1, **caractérisé en ce que** la zone d'accouplement sur l'arbre (75) de l'ensemble d'accouplement sur l'arbre (80, 90, 100) est susceptible d'être appliquée en direction radiale sur l'arbre (5).

7. Dispositif de freinage et/ou de serrage selon la revendication 1, **caractérisé en ce que** la zone d'accouplement sur l'arbre (75) de l'ensemble d'accouplement sur l'arbre (80) comporte deux brides de tension (81, 82) susceptibles d'être contraintes l'une contre l'autre.

8. Dispositif de freinage et/ou de serrage selon la revendication 1 ou 5, **caractérisé en ce que** la zone d'accouplement sur l'arbre (75) de l'ensemble d'accouplement sur l'arbre (90) comporte deux éléments de tension de cône annulaires (93, 94) qui sont susceptibles d'être contraints contre les cônes (91) opposés du noyau de bride (63).

9. Dispositif de freinage et/ou de serrage selon la revendication 1, **caractérisé en ce que** la zone d'accouplement sur l'arbre (75) de l'ensemble d'accouplement sur l'arbre (100) comporte un évidement (102) à volume réductible, dans lequel est placé en inclusion un corps en élastomère (104) en tant que corps de refoulement.
